(19) Europäisches Patentamt
European Patent Office
Office européen des brevets

(11) EP 4 283 030 B1

(12) **EUROPEAN PATENT SPECIFICATION**

(45) Date of publication and mention of the grant of the patent:
**19.11.2025 Bulletin 2025/47**

(21) Application number: **23175508.3**

(22) Date of filing: **25.05.2023**

(51) International Patent Classification (IPC):
***D03D 9/00** (2006.01)* ***D03D 1/00** (2006.01)*
***D03D 15/41** (2021.01)* ***D03D 15/283** (2021.01)*
***D03D 15/533** (2021.01)* ***B32B 13/14** (2006.01)*
***D06N 7/00** (2006.01)* ***B01D 71/00** (2006.01)*
***B32B 5/02** (2006.01)* ***B32B 27/12** (2006.01)*
***B32B 27/36** (2006.01)* ***B32B 27/40** (2006.01)*
***D06N 3/00** (2006.01)* ***D06N 3/12** (2006.01)*
***D06N 3/14** (2006.01)* ***D06N 5/00** (2006.01)*

(52) Cooperative Patent Classification (CPC):
**D03D 9/00; B32B 5/024; B32B 27/12; B32B 27/36; B32B 27/40; D03D 1/0088; D03D 15/283; D03D 15/41; D03D 15/533; D06N 3/0006; D06N 3/123; D06N 3/14; D06N 5/00;**
B32B 2262/0253; B32B 2262/0269; (Cont.)

(54) **TEXTILE REINFORCEMENT STRUCTURE AND WATERPROOFING SYSTEM**
TEXTILE VERSTÄRKUNGSSTRUKTUR UND WASSERABDICHTUNGSSYSTEM
STRUCTURE DE RENFORT TEXTILE ET SYSTÈME D'IMPERMÉABILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.05.2022 PT 2022117997**

(43) Date of publication of application:
**29.11.2023 Bulletin 2023/48**

(73) Proprietors:
- **Saint-Gobain Portugal SA**
  **3800-055 Aveiro (PT)**
- **Têxteis Penedo S.A.**
  **4835-132 Guimarães (PT)**
- **CITEVE - Centro Tecnológico das Indústrias Têxtil e do Vestuário de Portugal**
  **4760-034 Vila Nova de Famalicão (PT)**
- **ITECONS - Instituto de Inv. e Desenv. Tecn. Para a Construção, Energia, Ambiente e Sustentabilidade**
  **3030-289 Coimbra (PT)**
- **CENTITVC - Centro de Nanotecnologia e Materiais Tecnicos, Funcionais e Inteligentes**
  **4760-034 Vila Nova de Famalicão (PT)**

(72) Inventors:
- **CARDOSO DA SILVA, LUIS MIGUEL**
  **3810-332 AVEIRO (PT)**
- **DA SILVA SEQUEIRA, PEDRO MIGUEL**
  **4450-358 MATOSINHOS (PT)**
- **RIBEIRO DE SOUSA FERREIRA, PEDRO MIGUEL**
  **4520-605 SÃO JOÃO DE VER (PT)**
- **DO ROSÁRIO DA SILVA ROLEIRA MARINHO, MARIA AUGUSTA**
  **4760-034 VILA NOVA DE FAMALICÃO (PT)**
- **MARTINS COSTA, LUANI**
  **4760-034 VILA NOVA DE FAMALICÃO (PT)**
- **DE ALMEIDA MORGADO, JOSÉ**
  **4760-034 VILA NOVA DE FAMALICÃO (PT)**
- **RODRIGUES, FILIPE MIGUEL**
  **4760-034 VILA NOVA DE FAMALICÃO (PT)**
- **COUTOS DOS SANTOS VENTURA, SANDRA GABRIELA**
  **4835-132 GUIMARÃES (PT)**
- **DIAS AFONSO, AGOSTINHO ANTÓNIO**
  **4835-132 GUIMARÃES (PT)**
- **SILVA ABREU, JOÃO**
  **4835-132 GUIMARÃES (PT)**
- **VIEIRA SIMÕES, NUNO ALBINO**
  **3030-504 COIMBRA (PT)**
- **VIEIRA SIMÕES, MARIA INÊS**
  **3150-230 CONDEIXA-A-VELHA (PT)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **CARDOSO FERREIRA, CÉSAR JOSÉ 4760-034 VILA NOVA DE FAMALICÃO (PT)**
- **SILVA REMÉDIOS FURTADO, CRISTINA ALEXANDRA 4760-034 VILA NOVA DE FAMALICÃO (PT)**
- **DE ARAÚJO SÁ, ISAQUE JOAQUIM 4760-034 VILA NOVA DE FAMALICÃO (PT)**
- **NETO RIBEIRO, JOÃO PEDRO 4760-034 VILA NOVA DE FAMALICÃO (PT)**
- **FERNANDES SALGADO, JOSÉ ALBERTO 4760-034 VILA NOVA DE FAMALICÃO (PT)**
- **DA SILVA MIDÃO, MARTA SOFIA 4760-034 VILA NOVA DE FAMALICÃO (PT)**
- **GONÇALVES DA ROCHA, MIGUEL ÂNGELO 4760-034 VILA NOVA DE FAMALICÃO (PT)**

(74) Representative: **Patentree**
**Edificio Net**
**Rua de Salazares, 842**
**4149-002 Porto (PT)**


(56) References cited:


- **K�STER BAUCHEMIE AG: "K�STER Flex Fabric Plastic fabric for reinforcing thin-layer waterproofing", 23 February 2015 (2015-02-23), pages 1 - 1, XP093089217, Retrieved from the Internet <URL:https://www.deltamembranes.com/app/uploads/2018/11/KOSTER-Flex-Fabric.pdf> [retrieved on 20231006]**
- **SAINT-GOBAIN WEBER GMBH: "Technical Data Sheet weber.sys 981", 5 August 2019 (2019-08-05), D�sseldorf, pages 1 - 2, XP093000749, Retrieved from the Internet <URL:https://www.de.weber/files/de/2022-06/weber.sys%20981_EN.pdf> [retrieved on 20221122]**
- **SIKA CORPORATION: "Product Data Sheet Sikagard FlexCoat EM", 31 July 2018 (2018-07-31), Lyndhurst, pages 1 - 2, XP093000745, Retrieved from the Internet <URL:https://usa.sika.com/content/dam/dms/us01/u/sikagard_flexcoatem.pdf> [retrieved on 20221122]**



(52) Cooperative Patent Classification (CPC): (Cont.)
B32B 2262/0276; B32B 2262/065; B32B 2262/108; B32B 2270/00; B32B 2307/5825; B32B 2307/7265; B32B 2307/7376; D06N 2209/142; D10B 2331/04; D10B 2401/18; D10B 2505/02

## Description

### TECHNICAL FIELD

The present disclosure relates to a textile reinforcement structure for waterproofing systems which may be combined with a liquid water-based waterproofing membrane for liquid application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a water-proofing membrane, preferably the water-based waterproofing membrane of the present disclosure.

### BACKGROUND

Currently, an interesting solution on the market for roofs waterproofing are waterproofing membranes, i.e., liquid polymeric membranes - polyurethane resins - based on organic solvent or bi-components.

Waterproofing membranes can be solvent-base waterproofing membranes or water-based waterproofing membranes.

Water-based waterproofing membranes, also known as film-forming aqueous polyurethane and acrylic dispersions, comprises an aqueous solvent, preferably water, and polyurethane (PUR).

Solvent-based waterproofing membranes, also known as solvent-based polyurethane coatings, comprises an organic solvent incorporating polyurethane (PUR).

The solvent-based waterproofing membranes described in the prior art presents satisfactory technical performance. However, during application, additional safety conditions are required, mainly due to VOCs emissions (Volatile Organic Compounds) and the potential presence of isocyanates that are quite harmful to the applicator's health. There are other disadvantages related to fire behaviour. Since its durability may be conditioned by some atmospheric conditions and mechanical stress, its use in roofs is limited, since it is imperative to ensure watertightness.

Typical market references for waterproofing membranes: Solvent-based PUR membrane (Saint-Gobain): Weberdry PUR seal; Solvent-based PUR membrane (Sika): Sika lastic 614; Mapei PURTOP easy, Solvent-based PU membrane; Aquatex roof plus (Mapei), acrylic membrane in water dispersion for roofing, without mentioning tests according to EAD 030350-00-0402.

The existing waterproofing membranes on the market are usually reinforced by a textile structure, providing a waterproofing system, wherein the most common textiles used are non-woven polypropylene (PP) or polyester (PES).

Examples of waterproofing systems found in prior art are solvent-based PUR membrane reinforced with non-woven PES (weberdry PUR seal and BMI Sealoflex Ultima), waterbased membrane with PES reinforcement (BMI Sealoflex Protecta) and solvent-based PUR membrane reinforced with non-woven PES (Sika lastic 614), which present low resistance to tear actions and tend to tear quite easily.

Others market references for waterproofing systems comprising solvent-based membranes and textile reinforcement structures are: Geo textile non-woven fabric for liquid waterproofing systems (Polites TNT); Geo textile non-woven fabric PP for liquid waterproofing systems (Jaeger); Geo textile non-woven fabric PES for liquid waterproofing systems (Jaeger); Glass fibber mesh, coated with acrylic resin (SG Adfors).

The existing solutions of textile reinforcement structures present losses of mechanical and chemical resistances that results in its cracking damage and lower durability during its life cycle.

The pattern draft woven structures can be critical to the drying process and final mechanical performance. In the case of non-woven fabric, widely used in the prior art as textile reinforcement structures, e.g., geo textile non-woven fabric in PP and PES from Jaeger, its closed structure difficulties the drying process of the waterproofing membrane, as it absorbs the material and makes it very difficult for water to evaporate and does not allow a combined composite between the materials, resulting in a layered system. In addition, these non-woven fabrics present low tear resistance.

At the same time, woven fabric structures with a very open pattern and density also do not respond to the balance between mechanical reinforcement and ease of drying and transfer of the waterproofing membrane through the fabric. Technical data sheet "weber.sys 981" discloses a glass fiber woven mesh with a mesh size of 4 x 4 mm.

The examples described in prior art, for instance the glass fiber mesh coated with acrylic resin of SG Adfors, also usually applied as textile reinforcement structure, presents an open structure, leading to inadequate mechanical strength to reinforce and improve the mechanical properties of the waterproofing membrane. Moreover, both non-woven fabrics and glass fiber mesh show considerable loss of tear strength when exposed to the highly alkaline environment. Technical data sheet "KOSTER Flex Fabric" discloses a woven plastic fabric for reinforcing thin-layer waterproofing made of 100% polypropylene. Product data sheet "Sikagard® FlexCoat EM" discloses a woven-mesh, polypropylene reinforcing fabric.

Such observations demonstrate the lack of qualified and suitable solutions for waterproofing of roofs and other surfaces and support the need of the development of differentiated and qualified solutions, namely textile reinforcement structures, waterproofing membranes and waterproofing systems.

Furthermore, there is no mention in the prior art to products or solutions presenting the integration of different concepts, functionalities and technologies proposed in the present disclosure.

These facts are described to illustrate the technical problem solved by the achievements of the present disclosure.

## GENERAL DESCRIPTION

The present disclosure aims to overcome the disadvantages described above in the state of the art with the development of a textile reinforcement structure for waterproofing systems which may be combined with a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a waterproofing membrane, preferably the water-based waterproofing membrane of the present disclosure.

Within the scope of the present disclosure, waterproofing membranes are compositions based on film-forming polyurethane dispersions generally used in the technical field of waterproofing construction materials, for instance in roofing and balcony systems. Waterproofing membranes can be solvent-base waterproofing membranes or water-based waterproofing membranes.

Within the scope of the present disclosure, water-based waterproofing membranes, also known as film-forming aqueous polyurethane dispersions, relates to a polymeric paste formulation composed by an aqueous solvent, preferably water, a polyester-polyurethane resin with film formation temperature of 0°C, 850% elongation and tensile strength of 15MPa, between 40 to 70%, fillers, talc, biocide and fungicide, polyurethane based rheological agents between 0.01 and 0.10%, pigments between 3 and 10%, pH regulator and coalescent agents.

Within the scope of the present disclosure, solvent-based waterproofing membrane, also known as solvent-based polyurethane coatings, comprises an organic solvent incorporating polyurethane (PUR).

Within the scope of the present disclosure, the apertures of the woven mesh (hole size/size of the openings in the woven mesh), also called "mesh draft pattern" represents the warp and weft yarn intersection in order to achieve a textile structure with a substantially quadrangular mesh shape design.

Within the present disclosure, when it is mentioned an aperture of the woven mesh of 1.5 mm, it means that each side of the quadrangular aperture has 1.5 mm, leading to an aperture of the woven mesh of 2.25 $mm^2$.

Within the scope of the present disclosure, tack or tacking refers to the fact that the material still gives some adhesion when touched with the fingers, being a sign that film formation and drying is still incomplete.

In an embodiment, the textile reinforcement structure described in the present disclosure is useful for mechanical reinforcement of the waterproofing membranes and can be applied extensively in waterproofing systems for roofs and other surfaces.

In an embodiment, the present disclosure relates to a totally innovative and differentiated product in relation to the state of the art of the existing waterproofing systems in the construction industry for traditional and inverted roofs, and other surfaces e.g., facades, disclosing an advanced waterproofing system, comprising a water-based waterproofing membrane with radiation-reflective properties, reinforced with an intelligent textile substrate coupled with moisture and temperature sensors and active heating.

The present disclosure solves the following problems identified in the prior art:

- Losses of mechanical and chemical resistances that results in cracking damage and lower durability during the life cycle of the typical of existing solutions for roofs waterproofing reinforced solvent and water-based membrane;
- Inexistence textile reinforcement structures for water-based waterproofing membranes that results in losses of mechanical and chemical resistances that results in cracking damage and lower durability during the life cycle. The existing textile reinforcement structures on the market (non-woven) hinders the drying process of the membrane, as it absorbs the material and delays the water evaporation and does not allow a combined composite between the materials, resulting in a layered system. The very open apertures of the woven mesh and density of the fibre glass mesh structure described in the prior art allows the membrane transfer, resulting in a more homogeneous composite than in the case of non-woven fabrics, however it does not present sufficient mechanical strength to reinforce and improve the mechanical properties of the membrane, leading its cracking;
- The existing textile reinforcement structures on the market (e.g., non-woven fabrics and glass fibre mesh) show considerable loss of tear strength when exposed to the highly alkaline environment promoted by the water-based waterproofing membrane;

- Safety conditions to the applicator's health mainly due to lower VOCs emissions (Volatile Organic Compounds) of the water-based waterproofing membranes in comparison to the solvent-based waterproofing membranes;
- Inadequate water-based waterproofing membrane with high TSR (reflectance) to improve the sustainability and thermal comfort in buildings;
- Inexistence of a method to control or improve the membrane cure.

An aspect of the present solution relates to a waterproofing system comprising active heating means to accelerate the curing process of the waterproofing membrane, that is critical in adverse climate conditions, namely at low temperatures and/or high air moisture. The waterproofing system comprising active heating means of the present disclosure are capable of monitoring and regulate the moisture (by increasing the temperature and thus promoting evaporation) in the interior of the membrane during the curing process and also during the life cycle of the waterproofing system, in order to accelerate the cure process and/or to prevent its large damages and facilitate the maintenance.

The present invention relates to a textile reinforcement structure for waterproofing systems wherein the textile reinforcement structure is a woven fabric structure with apertures; wherein the size of the apertures of the woven mesh ranges from 0.5 to 2.5 mm wherein the grammage of the textile reinforcement structure ranges from 60 to 300 g/m2; wherein the thickness of the textile reinforcement structure ranges from 0.3 to 1.8 mm; wherein the textile material is selected from the list consisting of: polyester, polypropylene, or combinations thereof.

In a preferred embodiment, the apertures of the woven mesh of the textile reinforcement structure for waterproofing systems ranges from 1 to 2.5 mm; even more preferably from 1.0 to 2.0 mm; even more preferably from 1.3 to 1.6 mm.

In an embodiment, the textile reinforcement structure for waterproofing systems comprises a size of the openings in the woven mesh ranging from 0.5-2.0 mm.

In an embodiment, the grammage ranges from 90 to 200 g/$m^2$; more preferably from 147 to 163 g/$m^2$. In an embodiment, the grammage ranges from 90 to 200 g/$m^2$ and the size of the apertures (hole size) in the woven mesh ranges from 1.0 to 2.0 mm.

In a preferred embodiment, the grammage ranges from 160 to 170 g/$m^2$ and textile material is polypropylene.

In another preferred embodiment, the grammage ranges from 150 to 160 g/$m^2$ and textile material is polyester.

In another embodiment, the textile reinforcement structure for waterproofing systems comprises a bidirectional tear resistance ranging from 250-450 N; more preferably 300-400 N, measured through measured through standard EN ISO 13937-4:2000.

In an embodiment, the textile reinforcement structure for waterproofing systems comprises a textile reinforcement structure grammage ranging from 90-200g/ $m^2$; preferably from 147 to 170 g/$m^2$.

In an embodiment, the textile reinforcement structure for waterproofing systems comprises a textile reinforcement structure thickness ranging from 0.5 to 1.5 mm; preferably from 0.8 to 1.3 mm.

In an embodiment, the textile reinforcement structure for waterproofing systems comprises recycled textile material.

In an embodiment, the textile reinforcement structure for waterproofing systems comprises filament yarns comprising a linear mass ranging from 150x2 to 250x4 dtex; preferably 167x2 to 167x4 dtex.

In an embodiment, the textile reinforcement structure for waterproofing systems comprises filament yarns comprising a twist ranging from 100-700 turns/meter, preferably 200-700 turns/meter, more preferably 200-400 turns/meter, preferably used in the direction of the warp.

In a preferred embodiment, the twist ranges from 250 to 350 turns/meter and the textile material is polyester.

In another preferred embodiment, the twist ranges from 100 to 200 turns/meter and the textile material is polypropylene.

In an embodiment, textile reinforcement structure for waterproofing systems comprises a warp comprising 14-30 yarns/cm, and a weft comprising 14-30 yarns/cm; preferably, a warp comprising 16-27 yarns/cm and a weft comprising 16-27 yarns/cm; more preferably, a warp comprising 18-23 yarns/cm and a weft comprising 18-23 yarns/cm; even more preferably, a warp comprising 19 yarns/cm and a weft comprising 23 yarns/cm.

In an embodiment, the textile reinforcement structure for waterproofing systems is a woven fabric structure and comprises the following characteristics:

a size of the apertures (hole size) of the woven mesh of 1.5 mm; measured with a square;
a grammage of 155 g/$m^2$; measured according to the standard ISO 3801:1977;
a thickness of 0.8 mm; measured according with standard ISO 5084: 1996;
a bidirectional tear resistance of 300 N, measured through the standard EN ISO 13937-4: 2000;
filament yarns of 100% polyester (PES) with a linear mass of 167x2 dtex and a twist of 300 turns/meter used in the direction of the warp;

a warp with 19 yarns/cm and a weft with 23 yarns/cm.

In an embodiment, the textile reinforcement structure for waterproofing systems is a woven fabric structure and comprises the following characteristics:

a size of the apertures (hole size) in the woven is of 1.5 mm; measured with a square;
a grammage of 165 g/$m^2$; measured according to the standard ISO 3801:1977;
a thickness of 0.8 mm; measured according with standard ISO 5084: 1996;
a bidirectional tear resistance of 300 N, measured through the standard EN ISO 13937-4: 2000;
filament yarns of 100% polypropylene (PP) with a linear mass of 167x2 dtex and a twist of 140 turns/meter used in the direction of the warp;
a warp with 19 yarns/cm and a weft with 23 yarns/cm.

In a preferred embodiment, the waterproofing system is a water-based waterproofing system.
In an embodiment, the textile reinforcement structure for waterproofing systems comprises moisture sensor; temperature sensor; or combinations thereof.
In an embodiment, the textile reinforcement structure for waterproofing systems comprises control/regulation means; preferably electronic control and/or regulation.
In an embodiment, the textile reinforcement structure for waterproofing systems comprises means for control heating to accelerate the cure process and regulate the moisture during the life cycle of the textile reinforcement structure.
In an embodiment, the textile reinforcement structure for waterproofing systems comprises means for control heating comprising heating wires, preferably wherein the heating wires are integrated by weaving in the textile reinforcement structure.
In an embodiment, the heating wires spacing ranges from 0.5 to 4 cm.
In an embodiment, the heating wires are copper wires.
In an embodiment, the sensors are textile sensors; preferably integrated by weaving in the textile reinforcement structure.
In an embodiment, the temperature and moisture sensors spacing ranges from 0.5 to 50 cm.
In an embodiment, the conductive wires for the temperature sensors are nickel wires.
In an embodiment, the conductive wires for the moisture sensors are copper wires.
In an embodiment, the sensors are screen printed sensors; preferably integrated directly by lamination into the textile reinforcement structure.
In an embodiment, the printed sensors are based on silver ink.
In another embodiment, the textile reinforcement structure of the invention can be used in combination with a water-based waterproofing membrane comprising:

a water-based dispersion of polyester-polyurethane resin, in a concentration ranging from 40-70% w/w;
one or more radiation reflection enhancer additive in a concentration ranging from 3-10% w/w;
a polyurethane rheological agent in a concentration ranging from 0.01 to 0.10% w/w,
an alkaline pH regulator between 0.01 and 0.1% w/w, usually amine based, to stabilize the dispersion,
wherein the membrane forms a film at a temperature above 5°C inclusive, elongation at break of 500%, tensile strength of 8 MPa, tear strength of 27N/mm (both measured by ASTM D412-06 and AST D412-00), and a viscosity ranging from 50000 to 100000 mPa.s.

The viscosity may be measured by different methods known in the art, in the present disclosure the membrane viscosity was measured through a Brookfield RV2+ with spindle 6 at 5 rpm, in a beaker with a diameter of 8 cm and a volume of 500ml, at a temperature of 22°C.
In an embodiment, the water-based waterproofing further comprises talc, antifoam agent, biocide agent, fungicide agent and a pH regulator agent, or mixtures thereof.
In an embodiment, the radiation reflection enhancer additive is selected from a list consisting of: pigment grade titanium dioxide, chromium iron oxide, zinc iron chromite brown spinel, chromium green-black hematite, or mixtures thereof.
Surprisingly, the drying time of the water-based waterproofing membrane of the present disclosure applied in the textile reinforce structure of the present disclosures is equal or less than 2 hours at a temperature of 22 °C and up to 8 hours at a temperature of 5 °C with a relative humidity up to 80%, evaluated through weight loss during time and tack effect (is considered dried when less than 10% weight loss is achieved and no tack effect on both sides of the membrane).
In another embodiment, the present disclosure relates to a waterproofing system comprising the textile reinforcement structure herein described and one or more layers of a waterproofing membrane; preferably two layers.

In a preferred embodiment, the waterproofing membrane is the water-based waterproofing membrane herein described.

In an embodiment, the waterproofing system comprising the textile reinforcement structure herein described and one or more layers of a waterproofing membrane, has a final thickness ranging around 2 to 3 mm, preferably around 2 mm.

In an embodiment, the waterproofing system comprises two layers of a waterproofing membrane, wherein each layer comprises a thickness ranging from 0.75 to 1 mm.

In an embodiment, the waterproofing system further comprises a plurality of layers of different materials.

In an embodiment, the waterproofing system may further comprise an insulation board, a first base layer cementitious mortar, a reinforcement mesh, a second base layer cementitious mortar, a first waterproofing membrane layer, said textile reinforcement structure and a second waterproofing membrane layer, wherein:

the insulation board has a thickness ranging from 40 to 150 mm;
the first base layer cementitious mortar has a thickness of 3 mm;
the reinforcement mesh has a weight ranging from 160 to 170 g/$m^2$; preferably 160 g/$m^2$
the second base layer cementitious mortar has a thickness of 3 mm;
the first waterproofing membrane layer has a thickness ranging from 0.75 to 1 mm and is applied in the proportion of 2 kg of waterproofing membrane per $m^2$ of the textile reinforcement structure;
the textile reinforcement structure has a thickness ranging from 0.3 to 1.8 mm;
the second waterproofing membrane layer has a thickness ranging from 0.75 to 1 mm and is applied in the proportion of 2 kg of waterproofing membrane per $m^2$ of the textile reinforcement structure.

In an embodiment, the waterproofing system comprises the water-based waterproofing membrane disclosed in the present invention; or a solvent-based waterproofing membrane; or a water-based waterproofing membrane.

Throughout the description and claims the word "comprise" and variations of the word are not intended to exclude other technical features, such as other components, or steps. Additional objects, advantages and disclosure features will become evident to technical experts after description examination or can be learned through the practice of dissemination. The following examples and figures are provided as illustrations and are no intended to be limitative for the presented disclosure. Furthermore, the present disclosure covers all possible combinations of particular or preferred embodiments described in this document within the scope of the independent claim.

## BRIEF DESCRIPTION OF THE DRAWINGS

For an easier understanding, the following figures provide preferred embodiments for illustrating the disclosure and should not be seen as limiting the scope of the invention.

**Figure 1:** Schematic representation of a realization of the waterproofing system.
**Figure 2:** Schematic representation of an embodiment of the waterproofing system comprising a textile reinforcement structure with integration of heating wires and sensor wires, and the application of the waterproofing membrane.
**Figure 3:** Schematic representation of an embodiment of the waterproofing system comprising a textile reinforcement structure with the integration of heating wires and moisture and temperature textile sensors. **A:** Reinforcement textile structure; **B:** Heating Wire + Textile Temperature Sensor; **C:** Textile Moisture Sensor; **D:** Waterproofing and Thermal Reflective Water-based Membrane.
**Figure 4:** Schematic representation of an embodiment of the waterproofing system that comprises a textile reinforcement structure with the integration of heating wires and moisture and temperature screen printed sensors. **A:** Screen-printed Moisture Sensor; **B:** Screen-printed Temperature Sensor; **C:** Reinforcement textile Structure; **D:** Heating Wire; **E:** Waterproofing and Thermal Reflective Water-based Membrane.

## DETAILED DESCRIPTION

The present disclosure relates to a textile reinforcement structure for waterproofing systems which may be combined with a water-based waterproofing membrane for application on roofs and other surfaces. The textile reinforcement structure may also comprise coupled moisture and temperature sensing and active heating systems to accelerate the cure process and regulate the moisture during the life cycle. The water-based waterproofing membrane comprises radiation reflection enhancer additive, improving the thermal reflectance capacity and the sustainability and thermal comfort in buildings. Furthermore, the present invention also relates to a waterproofing system comprising such textile reinforcement structure and a water-proofing membrane, preferably the water-based waterproofing membrane of the present disclosure.

The textile reinforcement structure of the present disclosure comprises technical requirements as grammage, thickness, mechanical and chemical resistance, and low hydrophilicity. Such technical requirements are justified by the need for a lightweight and flexible textile reinforcement structure that is thick enough to comply with the standard minimum thickness for reinforced waterproofing membranes (2mm), with bidirectional resistance to improve the mechanical properties of membrane and maintain sufficient strength after loss of resistance caused by the alkaline environment (pH 12-14) promoted by the membrane after application and during the life cycle. Also, using yarns made with low hydrophilicity materials in balance with a specific pattern draft to enhance the fast-drying process of the membrane, which happens through the evaporation of water.

The textile reinforcement structure of the present disclosure may comprise: several continuous filament yarns of woven fabric structure of polyester, recycled polyester, polypropylene, recycled polypropylene, or combinations thereof. In terms of the texture, the pattern draft and density, warp and weft yarns create a woven fabric structure with small apertures (0.5 to 2.5 mm; preferably 1.0 to 2.0 mm) (size of the openings in the woven mesh/(mesh draft pattern), which surprisingly allows the optimal transfer of the membrane through the structure, promoting its adhesion with the textile structure, and fulfilling the requirements of low grammage (100-300g/$m^2$) and thickness (0.3-1.8 mm; preferably 0.8-1.4 mm) and surprisingly provides high bidirectional tear resistance (250-500N), measured through standard EN ISO 13937-4:2000.

In a preferred embodiment, the textile reinforcement structure of the present disclosure may comprise continuous filament yarns of polyester, polypropylene, or combinations thereof, with a linear mass of 167x2-167x4 dtex and a twist of 100-700 turns/meter (preferably 200-700 turns) used in the direction of the warp (14-24 yarns/cm) and weft (17-27 yarns/cm) of a woven fabric structure. In terms of the texture, the pattern draft and density of the woven fabric structure warp and weft yarns were defined, in order to develop the woven fabric structure with small apertures of the woven mesh (0.5-2.5mm; preferably 1 to 2.5 mm; more preferably 1.0 to 2.0 mm) , which allows the optimal transfer of the waterproofing membrane, through the structure, promoting its adhesion with the textile structure, and fulfilling the requirements of low grammage (150-170 g/$m^2$; preferably 155 $\pm$5% g/$m^2$) and thickness (0.3 - 1.8 mm; preferably 0.8 $\pm$0.5 mm) with high bidirectional tear resistance (250 N - 350 N).

In a preferred embodiment, the textile reinforcement structure of the present disclosure may comprise: continuous 100% polyester (PES) composition filament yarns with a linear mass of 167x2 dtex and a twist of 300 turns/meter used in the direction of the warp (19 yarns/cm) and weft (23 yarns/cm) of a woven fabric structure.

In another preferred embodiment, the textile reinforcement structure of the present disclosure may comprise: continuous 100% polypropylene (PP) composition filament yarns with a linear mass of 167x2 dtex and a twist of 140 turns/meter used in the direction of the warp (19 yarns/cm) and weft (23 yarns/cm) of a woven fabric structure, a grammage of 165 g/$m^2$ and apertures of the woven mesh of 1.5 x 1.5 mm.

In another preferred embodiment, in terms of the texture, the pattern draft and density of the woven fabric structure warp and weft yarns were defined, to develop the woven fabric structure with small apertures (1.5mm) , which allows the optimal transfer of the waterproofing membrane, through the textile structure, promoting its adhesion with the textile structure, and fulfilling the requirements of low grammage (150-170 g/$m^2$) and thickness (0.8 mm) with high bidirectional tear resistance (300 N).

Surprisingly the textile reinforcement structure after application of the water-based waterproofing membrane presented tear resistance of 120N according to the EN ISO 13937-4.:2000.

Surprisingly the textile reinforcement structure, after application of the water-based waterproofing membrane, presented improved breaking strength according to the ISO 13934-1.:2000, i.e., a resistance loss below 20%, preferably below 10%.

The solution of the present disclosure responds to the cracking problems of waterproofing systems, combining a waterproofing membrane and a textile reinforcement material, not showing the lack of mechanical strength of the textile reinforcement materials described in the prior art.

The solution of the present disclosure responds to the inappropriate curing problems of the water-based waterproofing membranes of the prior art, due to the technical characteristics of the reinforcement substrates of the prior art and the variable climatic conditions, which can difficult the internal drying of the said membrane (with long curing times, especially in winter), thereby compromising the existing system durability. The textile reinforcement structure of the present disclosure solves this problem by the combination of features of the woven textile, namely: material, grammage, thickness and mesh apertures.

The present disclosure also aims to reduce the negative impacts caused on the environment and on the membrane applicator by using less toxic materials, such as water-based waterproofing membranes, improve the thermal performance of buildings by improving compatibility, mechanical and physical, with insulating panels, and also to facilitate the regulation of system internal moisture during its life cycle, with active monitoring and heating through the integration of sensors and wires in the textile reinforcement structure.

The present disclosure relates to a high performance water-based waterproofing membrane, wherein such membrane is a polymeric membrane (water-based polymeric dispersion) that presents a drying time of less than 2 hours at a temperature of 22°C and up to 8 hours at temperatures of 5°C with relative moisture up to 80%, after application, in order to achieve an equal or superior performance in terms of drying and mechanical resistance compared to typical values of solvent-based waterproofing membranes, recognized as effective by the market, additionally more sustainable and much less polluting and, certainly, with a performance level of drying and resistance superior to the currently available water-based solutions.

In an embodiment, to measure the drying time of the water-based waterproofing membrane herein disclosed, two layers of 2mm of the water-based waterproofing membrane was applied in a textile reinforcement structure, corresponding to 4 Kg of the water-based waterproofing membrane per $m^2$ of textile reinforcement structure, and the drying time was controlled with a chronometer. The water-based waterproofing membrane is considered dry when it is verified that weight loss is lower than 10% in 8h and no tack is notice in both sides of the membrane. Regarding the textile reinforcement structure used, it comprises continuous 100% polyester (PES); preferably recycled PES; composition filament yarns with a linear mass of 167x2 dtex and a twist of 300 turns/meter used in the direction of the warp (19 yarns/cm) and weft (23 yarns/cm) of a woven fabric structure. In terms of the texture, the pattern draft and density of the woven fabric structure warp and weft yarns were defined, to develop the woven fabric structure with small apertures (1.5mm) , which allows the optimal transfer of the waterproofing membrane, through the textile structure, promoting its adhesion with the textile structure, and fulfilling the requirements of low grammage (155g/$m^2$) and thickness (0.8 mm) with high bidirectional tear resistance (300N),

In another embodiment, to measure the drying time of the water-based waterproofing membrane herein disclosed, two layers of 2mm of the water-based waterproofing membrane was applied in a textile reinforcement structure, corresponding to 4 Kg of the water-based waterproofing membrane per $m^2$ of textile reinforcement structure, and the drying time was controlled with a chronometer. The water-based waterproofing membrane is considered dry when it is verified that weight loss is lower than 10% in 8h and no tack is notice in both sides of the membrane. Regarding the textile reinforcement structure used, it comprises continuous 100% polypropylene (PP) composition filament yarns with a linear mass of 167x2 dtex and a twist of 140 turns/meter used in the direction of the warp (19 yarns/cm) and weft (23 yarns/cm) of a woven fabric structure. In terms of the texture, the pattern draft and density of the woven fabric structure warp and weft yarns were defined, to develop the woven fabric structure with small apertures (1.5mm), which allows the optimal transfer of the waterproofing membrane, through the textile structure, promoting its adhesion with the textile structure, and fulfilling the requirements of low grammage (165g/$m^2$) and thickness (0.8 mm) with high bidirectional tear resistance (300N).

The water-based waterproofing membrane of the present disclosure surprisingly shows a drying time of equal or less than 2 hours at a temperature of 22 °C and up to 8 hours at a temperature of 5 °C with a relative humidity up to 80%, evaluated through weight loss during time and tack effect (is considered dried when less than 10% weight loss is achieved , preferably less than 5% weight loss, and no tack effect on both sides of the membrane)In an embodiment, the drying process and time of the membrane was evaluated at 5°C + 80% RH (relative humidity) by the following parameters:

- 1) Tack evaluation by touch with less than 8 hours in both sides of the membrane;
- 2) Weight loss of 2mm film formed during:

$$t\ (time) = 8h: < 10\%$$

$$t = 12h :< 5\%$$

$$t = 24h: < 5\%$$

Film is considered stable when weight loss is lower than 5%.

In an embodiment, the drying process and time of the membrane was evaluated 22°C + 55% RH by the following parameters:

- 1) Tack evaluation by touch with less than 2hours in both sides of the membrane;
- 2) Weight loss of 2mm film formed during:

$$t = 2h:<10\%$$

$$t = 8h:< 5\%$$

$$t = 24h: < 5\%$$

Film is considered stable when weight loss is lower than 5%.

The water-based waterproofing membrane comprises a water-based dispersion of polyester-polyurethane resin (the resin comprises a film-forming temperature of 0°C, elongation of 850%, tensile strength of 15MPa) in concentration between 40 and 70% (w/w), fillers and talc, antifoam, biocides and fungicide, polyurethane rheological agent between 0.01 and 0.10% (w/w);and optionally pigments between 3 and 10% (w/w) of the final product, pH regulator and coalescing agent. The water-based waterproofing membrane complies with basic requirements identified in EAD 03035000 0402. The test procedures described in the EAD may depend on the type of membrane and its categories of use, i.e., depend on:

Expected life cycle;
Use climate zone;
Usage load;
roof inclination;
Minimum surface temperatures;
Maximum surface temperatures.

The membrane of the present disclosure may also comprise optimized radiation reflectance properties through the incorporation of specific additives, preferably radiation reflection enhancer additives, capable of reflecting solar rays in the infrared range, allowing the reduction of thermal absorption of roofing element and, consequently, the transfer of heat to the interior of buildings, to promote thermal comfort of those. When applied, the white membrane has a TSR (Total Solar Reflection) above 0.7 and the orange and gray membrane has a TSR above 0.3. The reflectance property also helps to reduce damage/cracks (less tensions), since it reduces the thermal absorption in the material in climatic situations of high temperatures and solar incidence. Any of the membranes must not exceed 70°C temperatures by the action of infrared (IR) rays.

The membrane of the present disclosure surprisingly shows the essential characteristics to be approved in EAD 030350000402 tests (resistance to mechanical damage, resistance to fatigue, resistance to weathering, UV radiation and severe climate zones), to present a minimum life cycle of 25 years, categorized to civil construction.

**Table 1** depicts the composition of an example of the water-based polymeric membrane of the present disclosure.

**Table 1:** Composition of an example of the water-based polymeric membrane of the present disclosure

| Component | % (w/w) |
|---|---|
| polyester-polyurethane resin | 62 |
| Coalescent agent: DPnB (Dipropylene glycol n-butyl ether) | 3 |
| water | 2 |
| radiation reflection enhancer: titanium dioxide ($TiO_2$) | 3-10 |
| polyurethane rheological agent, | 0.03 |
| talc | 7 |
| Biocide: MIT/BIT (Methylisothiazolinone/ Benzisothiazolinone) | 0.2 |
| Defoamer silicone based | 0.5 |
| limestone filler | 15.17 - 22.17 |
| pH regulator: Aminomethyl propanol (2-amino-2-methyl-1-propanol) | 0.1 |

**Table 2** depicts some example of the textile reinforcement structure of the present disclosure.

**Table 2:** Composition of an example of the textile reinforcement structure of the present disclosure

| | **Example 1** | **Example 2** |
|---|---|---|
| Material | Polypropylene (PP) 100%(w/w) | Polyester (PES) 100%(w/w) |
| Apertures of the woven mesh (mm) | 1.5 | 1.5 |
| Grammage (g/m$^2$) | 165 | 155 |
| Linear mass | 167/2 dtex | 167/2 dtex |
| Turn | 140 turns | 300 turns |
| Thickness | 0.8 mm | 0.8 mm |

(continued)

| | Example 1 | Example 2 |
|---|---|---|
| Density | Warp 19 yarns/cm | Warp 19 yarns/cm |
| | Weft 23 yarns/cm | Weft 23 yarns/cm |
| Bidirectional tear resistance without membrane (EN ISO 13937-4:2000) | Warp value 250N (mean value) Weft value 330 N (mean value) | Warp value 398 N (mean value) Weft value 318 N (mean value) |
| Bidirectional tear resistance + membrane of table 1 (EN ISO 13937-4:2000) | Warp value 130 N (mean value) Weft value 150 N (mean value) | Warp value 110 N (mean value) Weft value 120 N (mean value) |
| Drying time with the membrane of **Table 1** (5 °C; 90% humidity) | ≈2h30h | ≈2h30 h |

In an embodiment, the water-based waterproofing membrane of the present disclosure presents the results depicted in **Table 3,** comparing with other solution known in the prior art.

**Table 3.** Results obtained for an embodiment of the water-based waterproofing membrane of the present disclosure, comparing with other solution known in the prior art.

| Property | Standard (when applicable) | Result of the membrane of the present disclosure | Other (prior art) |
|---|---|---|---|
| Drying time (22º + 55Hr) | Weight loss (%)<br>2h<br>8h<br>12h<br>24h | <br>10%<br>5%<br>5%<br>5% | <br>> 10%<br>> 10%<br>> 10%<br>5 to 10% |
| | Tackiness | < 2h | 8 to 48h |
| Tensile stenght (Mpa) | ASTM D412:06 2006) | 8 | 2 to 10 |
| Tear strenght (N/mm) | ASTM D412-00 (2000) | 27 | 5 to 30 |
| Elongation at break (%) | ASTM D412-06 (2006) | 500 | 100 to 800 |
| Viscosity (mPa) at 22°C | Brokfiled RVT 2+* | 50000 to 100000 mPa.s | 25000 to 100000 |

In an embodiment, the waterproofing system comprising the water-based waterproofing membrane and the textile reinforcement structure presents the results depicted in **Table 4,** comparing with other waterproofing system known in the prior art.

**Table 4.** Results obtained for an embodiment of the waterproofing system (comprising the water-based waterproofing membrane and the textile reinforcement structure system) of the present disclosure, comparing with other solution known in the prior art

| Property | Standard (when applicable) | Result of the waterproofing system of the present disclosure with the membrane of the present disclosure + PP textile reinforcement structure | Result of the waterproofing system of the present disclosure with the membrane of the present disclosure + PES textile reinforcement structure | Other (prior art)<br>Water-based waterproofing membrane of the prior art+ PES Non-woven fabric |
|---|---|---|---|---|
| Tear resistance (N) | EN ISO 13937-4:2000 | Warp value 130 N (mean value)<br>Weft value 150 N (mean value) | Warp value 110 N (mean value)<br>Weft value 120 N (mean value) | Warp value 42 N (mean value)<br>Weft value 34 N (mean value) |

The present disclosure also relates to a waterproofing system with radiation-reflective properties, comprising a quick-drying, water-based waterproofing membrane, reinforced with a textile substrate, which can also comprise intelligent systems, based on the integration of different materials and technologies, being able to achieve the technical performance equivalent to the best solvent-based waterproofing membrane solutions, with the associated environmental and health advantages. In addition to the above, the membrane also can reflect solar radiation to reduce heat absorption in the material and improve technical performance, in addition to sensing and regulating moisture and temperature coupled to the textile reinforcement substrate, capable of accelerating the curing process and regulate the internal moisture and temperature through an active heating system.

**Table 5** describes the layers included in the embodiment of the waterproofing system depicted in **Figure 1,** comprising a plurality of layers.

**Table 5.** Explanatory table of the layers included in the embodiment of the waterproofing system of the present disclosure depicted in **Figure 1.**

| No of layer | Description | Thickness | Application |
|---|---|---|---|
| **1** | Insulation board | 60mm (or 40mm) | Board with 1m x 0.5m |
| **2** | Base layer cementitious mortar (webertherm pro) | ~ 3mm | First layer application |
| **3** | Reinforcement mesh * ($160 g/m^2$) (webertherm normal mesh) | | On the still fresh material, stretch the fiberglass mesh and gently smooth the surface, incorporating the mesh superficially into the mortar. |
| **4** | Base layer cementitious mortar (webertherm pro) | ~ 3mm | The thickness of the mortar layer applied on the fiberglass mesh must guarantee its effective coverage. The finishing surface of the coating mortar must be flat. |
| **5** | Waterproofing membrane layer ($2Kg/ m^2$) | ~ 0.75 - 1mm | Wait seven days for the waterproofing coating to be applied. Initial application between 0.50-1 kg ensuring that it is not excessive for application of the reinforcement. |
| **6** | Textile reinforcement structure (integrated with moisture and temperature detection and regulation systems) | < 2mm | Application of the textile reinforcement structure. |
| **7** | Waterproofing membrane layer ($2 Kg/ m^2$) | ~ 0.75 - 1mm | Apply the remaining 1 kg after 4 to 12 hours (ensure that the previous material still has sticky power/tack). If the remaining 1 kg proves to be excessive, apply 2 times, with an interval of 4 to 8 hours. |

In another embodiment, the present disclosure relates to a waterproofing system, comprising a textile reinforcement structure, which may also comprise systems for sensing moisture and temperature and coupled active heating, based on the study of yarn types and technical sketching design, in accordance with the needs and technical requirements previously defined.

The main details to be retained in the textile reinforcement structure are:

- Alkaline resistance compared to existing non-woven solutions, measured at the shear/Tear stress level;

- Geometry of the chosen textile structure, which is a balance between the need for mechanical reinforcement without impairing the drying process of the water-based waterproofing membrane that occurs by evaporation, which in the textile structure with smaller mesh (apertures of the woven mesh) impairs drying and does not allow a continuous combined system between mesh and membrane (results only distinct layers of both), and the textile structure with larger mesh will not result in good mechanical strength/system reinforcement.

Other technical characteristics important to the textile reinforcement structure are:

- Alkaline resistance compared to existing non-woven solutions, measured at shear/Tear stress level;

- The selected network-shaped pattern/geometry (checkerboard pattern) of the developed textile structure promotes a balance between the need for mechanical reinforcement without harming the drying process of the water-based waterproofing membrane that occurs by evaporation;
- The textile with tight apertures of the woven mesh impairs drying and does not allow a continuous combined system between the network-shaped textile and the membrane (only resulting in distinct layers of both);
- The textile with very open apertures, will not result in good mechanical resistance/reinforcement to the system.

The present disclosure refers to the development of a woven textile structure, based on previously defined technical specifications, regarding material used, grammage, thickness, apertures of the woven mesh, mechanical and chemical resistance to withstand resistance losses caused by alkaline conditions (pH 12-14) promoted by the membrane after application and throughout its life cycle, thickness and low hydrophilicity to enhance the drying process.

In an embodiment, to achieve these characteristics, continuous filament yarns were used in the warp and weft direction of the fabric, of polyester composition, with a linear mass of 167x2 dtex and a twist of 300 turns/meter.

In an embodiment, in terms of texture, the sketching and density of the warp and weft yarns were defined, in order to develop a textile structure with a net-shaped pattern (checkered shape) with small size (0.5-2mm; preferably 0.5 to 2.5 mm; more preferably 1.0 to 2.0 mm) (apertures of the woven mesh), a crucial feature to allow the optimal transfer of the membrane through the structure, promote the adhesion of the waterproofing membrane and meet the requirements of low grammage (145-165 g/$m^2$) (or 90-200g/$m^2$) and thickness (0.8-1.4mm), high-strength bidirectional tearing (400N).

The technical sketching of this structure was thought and developed so that the conductive and active heating wires (materials), as well as the technologies applied for sensing and detecting moisture and temperature, were integrated into its weaving construction. Thus, for this structure to present the capacity of sensing and active heating, conductive wires of copper composition with technical specifications were used, to comply with the parameters of mechanical and chemical resistance (electrical conduction of these wires, after exposure in a highly alkaline environment (pH 12-14), specified grammage and thickness for the wires used in the reinforcement structure, and allow easy insertion in the developed structure. The ideal positioning of the conductive wires that make up the heating system was also evaluated. Specific spacings between these wires have been defined, so that the heating systems can achieve the desired performance.

In an embodiment, the spacing between the conductive wires in the textile reinforcement structure ranges from 0.5 to 3 cm.

In an embodiment, with the detection of moisture in a certain zone, a heating zone is activated that contains conductive wires that will be activated as a form of active heating and regulation of the temperature and moisture present, both in the curing process and throughout its life cycle. In addition, it is possible to identify the specific region where the moisture is detected - in case the moisture occurs through existing cracks - to enable the membrane to be kept punctually (specific area).

In an embodiment, the textile reinforcement structure with smart features is easy to handle and apply at the construction site (work) from the point of view of users/professionals in the area (specialists), so that the structure is organized in the form of a roller/blanket.

In an embodiment, an advanced and innovative thermal reflective waterproofing system was developed, applicable in the contemporary context of new constructions and rehabilitation of existing buildings, so that it is possible to respond in a positive way to the detectable problems in the standard waterproofing systems usually applied, and that it fulfils all the necessary requirements to be in accordance with the established norms, through EAD 030350 00 0402 and the predefined economic aspects (final cost for selling the solution).

In an embodiment, so that the waterproofing membrane reinforced with an intelligent textile structure can be applied in different contexts, namely in conventional and inverted roofs, a base layer was studied in terms of mechanical compatibility and adhesion (contact between the surfaces) between the membrane and the insulation materials present in conventional roofs.

In an embodiment, this base layer is composed of a cementitious mortar and a textile structure, to be applied in situations where the application of the waterproofing system does not occur on a standard base (concrete), but on possible insulation bases/materials, such as XPS and MW (mineral wool), conferring basic rigidity to facilitate the application of the waterproofing system, as well as to avoid membrane permeability in the porosity of thermal/acoustic insulation materials.

In an embodiment, the performance of the waterproofing membrane will greatly depend on its compatibility with the suitable textile reinforcement substrate, since the currently available textile structures are suitable for the application of solvent-based waterproofing membranes, being non-woven and networked structures of low mechanical and chemical strength (large size mesh checked patterns).

In an embodiment, as the waterproofing membrane is a water-based waterproofing membrane, the textile reinforcement substrate is fully differentiated from the solutions described in the prior art, as it has the simultaneous ability to promote high mechanical resistance, without compromising the drying process, due to its low hydrophilic properties, as well as the optimal thickness for membrane binding and transfer. Additionally, it has chemical stability suitable for final application in highly alkaline membrane media. The reinforcement structure has good malleability and reduced weight per square meter, allowing an easy application on site.

In an embodiment, the textile reinforcement structure comprises textile moisture and temperature detection and regulation systems, integrated into the weaving process. The introduction of textile sensors and heating systems by weaving simplifies the production process of the reinforcement structure and, in addition, it allows monitoring of system moisture and temperature to act in the regulation of these variables contributing to the active curing process of the system. There are no solutions available for textile temperature and moisture sensors and heating systems integrated by weaving in the textile reinforcement structure applied to waterproofing systems.

In an embodiment, the textile structure comprises screen printed sensors. The integration of functional temperature and moisture screen printed sensors directly by lamination into the textile reinforcement structure makes it possible to monitor system moisture and temperature. Printed sensors can be seen as an alternative to textile sensors.

In an embodiment, the integration of a heating system in the textile reinforcement structure allows the regulation of its temperature and moisture, contributing to an active curing process of the water-based waterproofing membrane.

In an embodiment, the integration of moisture detection sensors with the heating system allows the detection of cracking and consequent interior structure moisture regulation through the heating system activation, contributing to the system increase durability.

In an embodiment, the incorporation of radiation reflection enhancer additives on waterproofing membranes of different colours that present TSR values higher than market current solutions, allows to guarantee smaller thermal amplitudes in the materials when exposed to radiation, reducing the likelihood of cracking problems and, consequently, increasing system durability, as well as increasing the thermal comfort inside buildings.

In an embodiment, the use of the textile reinforcement structure of the present disclosure has the following advantages: shorter curing time, allowing the system to be applied and finalized in just one day, even in colder climates; greater resistance to cracking; thermal comfort within the building promoted by IV reflectance; bidirectional mechanical resistance; maintenance and extended service life through damp setting and dampness regulation; associated environmental and health advantages (water-based); fast water-based drying, compared to the market.

**Table 6** presents the properties, evaluation methodologies (associated standard), target values and results for the base layer mortar, waterproofing membrane and textile reinforcement structure of the waterproofing system developed and coupled system, according to the identified needs, of a preferred embodiment.

**Table 6.** Properties, evaluation methodologies (associated standard), target values and results for the base layer mortar, waterproofing membrane and textile reinforcement structure of the waterproofing system developed and coupled system of the present disclosure.

| | Property | Associated standard* | Target values | Results of the solution of the present disclosure |
|---|---|---|---|---|
| **Base layer mortar** | Adhesion to insulation (MPa) | EAD 040083-00-0404 | >0.08 (or cohesive rupture) | 0.07 (for mineral wool);<br>0.20 (XPS boards) |
| | Adhesion to concrete (MPa) | EAD 040083-00-0404:2020 | >1 | 1.5 |
| | Dynamic modulus of elasticity (MPa) | EN 14146:2004 | <8000 | 7500 |
| | Retraction (mm/m) | EN 998-1:2016 | <2.5 | 1.25 |
| | Compressive strength (MPa) | EN 998-1:2016 | >5 | 8 |
| | Flexural Strength (MPa) | EN 998-1:2016 | >2.5 | 3.5 |

(continued)

| | Property | Associated standard* | Target values | Results of the solution of the present disclosure |
|---|---|---|---|---|
| **Waterproofing membrane** | Drying time (h) | Room temperature 22°C | <2 | 2h: no tack<br>8h: < 10% weight loss |
| | Tensile Strength (MPa) | ISO 3376:2020 | >1 | 8 (ASTM D412-06:2006) |
| | Stretching (%) | ISO 527-3:2020 | >250 | 500 (ASTM D412-06:2006) |
| | Shear resistance/Tear (MPa) | ASTM D624:2020, type C | >1 | 25N/mm (ASTM D412-00:2000) |
| | Adhesion to concrete (MPa) | N/A | >1 | 1.5 |
| | Resistance to alkaline pH (lime water), adhesion | N/A | >1 | 1.2 |
| | Watertightness | EAD 030350 00 0402 | Aproved | Aproved |
| | White TSR | ASTM E903:2020 | >0.7 | 0.86 |
| | Gray and Orange TSR | | >0.3 | 0.36 |
| *The refer properties may be measured by different methos, in the present invention the different properties were calculated using the referred methods. | | | | |

**Figure 2** refers to an example of a waterproofing system comprising the textile reinforcement structure with integration of heating wires and sensor wires, with application of the water-based waterproofing membrane. In this example, the textile reinforcement structure used is a woven textile fabric structure composed by continuous polyester fibers with apertures of the woven mesh (hole size) of 1.5 mm, a grammage of 155 g/m$^2$, a thickness of 0.8 mm, a linear mass of 167/2 dtex. It comprises a warp of 19 yarns/cm and a weft of 23yarns/cm. The filament yarns comprise a twist of 300 turns/meter. The heating wires and the sensor wires are integrated through weaving with a spacing between them ranging from 0.5 to 4; preferably 0.5 to 3 cm for heating wires, and ranging from 0.5 to 50 cm for sensor wires.

In a preferred embodiment, the heating wires and the sensor wires are selected from copper, nickel.

In a preferred embodiment, the copper-based wires, for the heating system, are integrated during the weaving process of the reinforcing textile structure, with a spacing between them ranging from 0.5 to 4 cm.

The nickel and copper-based wires, for the temperature and moisture sensors, respectively, are integrated during the weaving process of the reinforcing textile structure, with a spacing between them ranging from 0.5 to 50 cm.

To obtain such waterproofing system, a first layer of the water-based waterproofing membrane is applied in the textile reinforcement structure, in the proportion of 2kg of waterproofing membrane per m$^2$ of the textile reinforcement structure, leading to a thickness of 0.8 to 1 mm. Then, a second layer of the water-based waterproofing membrane is applied leading to a final thickness ranging from 1.6 to 2mm.

**Figure 3** refers to a schematic representation of an embodiment of the waterproofing system (D) that comprises a textile reinforcement structure (A) with the integration of heating wires (B) and moisture and temperature textile sensors (C) and the water-based waterproofing membrane of the present disclosure. In this embodiment, the textile reinforcement structure used has a woven fabric structure and the textile material used is the one described in **Figure 2.** The heating wires and the sensor wires are integrated through weaving with a spacing between them of 0.5 to 4 cm; preferably 0.5 to 3 cm (for heating wires), and 0.5 to 50 cm; preferably 0.5 to 30 cm (for sensor wires). To obtain such waterproofing system, a first layer of the water-based waterproofing membrane is applied in the textile reinforcement structure, in proportion of 2kg of waterproofing membrane per m$^2$ of the textile reinforcement structure, leading to a thickness of 0.8 to 1 mm. Then, a second layer of the water-based waterproofing membrane is applied until a final thickness between 1.6 and 2mm.

**Figure 4** refers to a schematic representation of an embodiment of the waterproofing system (E) comprising a textile reinforcement structure (C) with the integration of heating wires (D) and moisture and temperature screen printed sensors (A and B, respectively). In this embodiment, the textile reinforcement structure used has a woven fabric structure and the textile material is the one described in **Figure 2.** The heating wires are integrated through weaving with a spacing between them of 0.5 to 3 4 cm; preferably 0.5 to 3 cm. The moisture and temperature screen printed sensors were directly integrated in the textile structure by lamination with a spacing between them of 0.5 to 50 cm.

In a preferred embodiment, the printed sensors of temperature and moisture are based on silver ink.

In a preferred embodiment the printed sensors are previously printed by screen-printing on a flexible substrate, preferably polyethylene terephthalate, and later laminated on the reinforcing textile structure, with a spacing between sensors of 0.5 to 50 cm; preferably 0.5 to 30 cm.

To obtain such waterproofing system, a first layer of the water-based waterproofing membrane is applied in the textile reinforcement structure, in proportion of 2kg of waterproofing membrane per $m^2$ of the textile reinforcement structure, leading to a thickness ranging from 0.8 to 1 mm. Then, a second layer of the water-based waterproofing membrane is applied until a final thickness ranging from 1.6 to 2 mm.

In an embodiment, the various components may contain additive enhancers to decrease the surface temperature of the structure.

In an embodiment, the various components may contain radiation reflection enhancer additives.

In an embodiment, the radiation reflection enhancer additives are incorporated into the waterproofing membrane.

In an embodiment, the radiation reflection enhancer additives are incorporated into the waterproofing membrane using a pre-dispersion of the additive.

In an embodiment, water is the solvent used in the additive pre-dispersion.

In an embodiment, the radiation reflection enhancer additive is TAYCA's JR-1000 pigment, comprising pigment grade titanium dioxide.

In an embodiment, JR-1000 pigment concentration ranges between 0.5 - 50 % by mass.

In an embodiment, the radiation reflection enhancer additive is pigment Black 30C941 from The Sheperd Color Company, comprising chromium iron oxide.

In an embodiment, the radiation reflection enhancer additive is the pigment Black 10P992, comprising chromium green-black hematite.

In an embodiment, pigment concentration Black 10P992 range from 0.1 - 20 % mass; more preferably 0.5 - 7% mass.

In an embodiment, the textile structure comprises PES fabric, presenting the characteristics of heavy structure, low membrane transfer, longer curing time, lower application uniformity.

The term "comprises" or "comprising" when used in this document is intended to indicate the presence of the characteristics, elements, integers, steps and components mentioned, but does not prevent the presence or addition of one or more other characteristics, elements, integers, steps and components, or groups thereof.

Where ranges are provided, the range limits are included. Furthermore, it should be understood that unless otherwise indicated or otherwise evident from the context and/or understanding of a technical expert, the values which are expressed as ranges may assume any specific value within the ranges indicated in different achievements of the invention, at one tenth of the lower limit of the interval, unless the context clearly indicates the contrary. It should also be understood that, unless otherwise indicated or otherwise evident from the context and/or understanding of a technical expert, values expressed as range may assume any sub-range within the given range, where the limits of the sub-range are expressed with the same degree of precision as the tenth of the unit of the lower limit of the range.

## Claims

1. A textile reinforcement structure for waterproofing systems,

   wherein the textile reinforcement structure is a woven mesh fabric structure;
   wherein the grammage of the textile reinforcement structure ranges from 60 to 300 g/$m^2$;
   wherein the textile material is selected from the list consisting of: polyester, polypropylene, or combinations thereof,
   **characterised in that** the aperture of the woven mesh ranges from 0.5 to 2.5 mm and **in that** the thickness of the textile reinforcement structure ranges from 0.3 to 1.8 mm.

2. The textile reinforcement structure for waterproofing systems according to the previous claim wherein the apertures in the woven mesh ranges from 1-2.5 mm; more preferably from 1.0 to 2.0 mm; even more preferably from 1.3 to 1.6 mm.

3. The textile reinforcement structure for waterproofing systems according to any of the previous claims comprising a textile reinforcement structure grammage ranging from 90 to 200 g/$m^2$; more preferably from 147 to 170 g/$m^2$; even more preferably from 147 to 163 g/$m^2$.

4. The textile reinforcement structure for waterproofing systems according to any of the previous claims wherein the textile reinforcement structure grammage ranges from 90 to 200 g/m$^2$ and the apertures of the woven mesh ranges from 1.0 to 2.0 mm.

**5.** The textile reinforcement structure for waterproofing systems according to any of the previous claims wherein the thickness of the textile reinforcement structure ranges from 0.5 to 1.5 mm; more preferably from 0.8 to 1.3 mm.

**6.** The textile reinforcement structure for waterproofing systems according to any of the previous claims wherein the filament yarns of the textile reinforcement structure comprise a linear mass ranging from 150x2 to 250x4 dtex; preferably 167x2 to 167x4 dtex.

**7.** The textile reinforcement structure for waterproofing systems according to any of the previous claims wherein the filament yarns of the textile reinforcement structure comprise a twist ranging from 100-700 turns/meter, preferably 200-700 turns/meter, more preferably 200-400 turns/meter, preferably used in the direction of the warp.

**8.** The textile reinforcement structure for waterproofing systems according to any of the previous claims comprising a warp comprising 14-30 yarns/cm, and a weft comprising 14-30 yarns/cm; preferably, a warp comprising 18-23 yarns/cm and a weft comprising 18-23 yarns/cm.

**9.** The textile reinforcement structure for waterproofing systems according to any of the previous claims wherein the waterproofing system is a water-based waterproofing system.

**10.** The textile reinforcement structure for waterproofing systems according to any of the previous claims comprising a moisture sensor; a temperature sensor; or combinations thereof.

**11.** The textile reinforcement structure for waterproofing systems according to any of the previous claims comprising electronic control and/or regulation means; in particular means for control heating, preferably wherein the means for control heating comprises conductive wires.

**12.** The textile reinforcement structure for waterproofing systems according to the previous claim 10, wherein the sensors are textile sensors, screen-printed sensors or mixtures thereof.

**13.** A waterproofing system comprising the textile reinforcement structure according to any of the previous claims 1-12 and two or more layers of a water-based waterproofing membrane; preferably two layers; more preferably the water-based waterproofing membrane comprises:

a water-based dispersion of polyester-polyurethane resin, in a concentration ranging from 40-70% w/w;
one or more radiation reflection enhancer additive in a concentration ranging from 3-10% w/w;
a polyurethane rheological agent in a concentration ranging from 0.01 to 0.10% w/w;
an alkaline pH regulator between 0.01 and 0.1% w/w, usually amine based, to
stabilize the dispersion;

wherein the membrane forms a film at a temperature above 5°C inclusive, elongation at break of 500%, tensile strength of 8 MPa, tear strength of 27N/mm and a viscosity ranging from 50000 to 100000 mPa.s at 22 °C.

**14.** The waterproofing system according to the previous claim comprising
an insulation board, a first base layer cementitious mortar, a reinforcement mesh, a second base layer cementitious mortar, a first waterproofing membrane layer, said textile reinforcement structure and a second waterproofing membrane layer.

**Patentansprüche**

**1.** Eine textile Verstärkungsstruktur für die Wasserabdichtungssysteme,

wobei die textile Verstärkungsstruktur eine gewebte Gitterstruktur ist;
wobei das Flächengewicht der textilen Verstärkungsstruktur zwischen 60 und 300 g/m$^2$ liegt;
wobei das Textilmaterial aus der folgenden Liste ausgewählt ist, bestehend aus:
Polyester, Polypropylen oder Kombinationen davon;

**dadurch gekennzeichnet, dass** die Maschenweite des Gittergewebes zwischen 0,5 und 2,5 mm liegt und dass die Stärke der textilen Verstärkungsstruktur zwischen 0,3 und 1,8 mm beträgt.

**2.** Die textile Verstärkungsstruktur für Wasserabdichtungssysteme nach dem vorangehenden Anspruch, wobei die Maschenweite in dem gewebten Gitter im Bereich von 1 bis 2,5 mm liegt; besonders bevorzugt von 1,0 bis 2,0 mm; ganz besonders bevorzugt von 1,3 bis 1,6 mm.

**3.** Die textile Verstärkungsstruktur für Wasserabdichtungssysteme nach einem der vorangehenden Ansprüche, umfassend eine textile Verstärkungsstruktur mit einem Flächengewicht von 90 bis 200 $g/m^2$; besonders bevorzugt von 147 bis 170 $g/m^2$; ganz besonders bevorzugt von 147 bis 163 $g/m^2$.

**4.** Die textile Verstärkungsstruktur für Wasserabdichtungssysteme nach einem der vorangehenden Ansprüche, wobei das Flächengewicht der textilen Verstärkungsstruktur im Bereich von 90 bis 200 $g/m^2$ liegt und die Maschenweite des gewebten Gitters im Bereich von 1,0 bis 2,0 mm liegt.

**5.** Die textile Verstärkungsstruktur für Wasserabdichtungssysteme nach einem der vorangehenden Ansprüche, wobei die Stärke der textilen Verstärkungsstruktur zwischen 0,5 und 1,5 mm liegt; besonders bevorzugt zwischen 0,8 und 1,3 mm.

**6.** Die textile Verstärkungsstruktur für Wasserabdichtungssysteme nach einem der vorangehenden Ansprüche, wobei die Filamentengarne der textilen Verstärkungsstruktur eine lineare Masse im Bereich von 150x2 bis 250x4 dtex, bevorzugt 167x2 bis 167x4 dtex, aufweisen.

**7.** Die textile Verstärkungsstruktur für Wasserabdichtungssysteme nach einem der vorangehenden Ansprüche, wobei die Filamentengarne der textilen Verstärkungsstruktur eine Drehung im Bereich von 100-700 Drehungen/Meter, bevorzugt 200-700 Drehungen/Meter, besonders bevorzugt 200-400 Drehungen/Meter, bevorzugt in Kettrichtung verwendet, aufweisen.

**8.** Die textile Verstärkungsstruktur für Wasserabdichtungssysteme nach einem der vorangehenden Ansprüche, umfassend eine Kette mit 14-30 Fäden/cm und einen Schuss mit 14-30 Fäden/cm; bevorzugt eine Kette mit 18-23 Fäden/cm und einen Schuss mit 18-23 Fäden/cm.

**9.** Die textile Verstärkungsstruktur für Wasserabdichtungssysteme nach einem der vorangehenden Ansprüche, wobei das Wasserabdichtungssystem ein Wasserabdichtungssystem auf Wasserbasis ist.

**10.** Die textile Verstärkungsstruktur für Wasserabdichtungssysteme nach einem der vorangehenden Ansprüche, umfassend einen Feuchtigkeitssensor, einen Temperatursensor oder Kombinationen davon.

**11.** Die textile Verstärkungsstruktur für Wasserabdichtungssysteme nach einem der vorangehenden Ansprüche, umfassend elektronische Steuer- und/oder Regelmittel, insbesondere Mittel zur Steuerung der Erwärmung, wobei die Mittel zur Steuerung der Erwärmung bevorzugt leitende Drähte umfassen.

**12.** Die textile Verstärkungsstruktur für Wasserabdichtungssysteme nach dem vorangehenden Anspruch 10, wobei die Sensoren textile Sensoren, siebgedruckte Sensoren oder Mischungen davon sind.

**13.** Ein Wasserabdichtungssystem, das die textile Verstärkungsstruktur nach einem der vorangehenden Ansprüche 1-12 und zwei oder mehr Schichten einer wasserdichten Membran auf Wasserbasis umfasst; bevorzugt zwei Schichten; besonders bevorzugt die wasserdichte Membran auf Wasserbasis, umfassend:

eine wasserbasierte Dispersion eines Polyester-Polyurethan-Harzes in einer Konzentration von 40-70 % w/w;
ein oder mehrere Additive zur Verbesserung der Strahlungsreflexion in einer Konzentration von 3-10 % (w/w);
ein rheologisches Additiv auf Polyurethanbasis in einer Konzentration von 0,01 bis 0,10 % w/w;
einen alkalischen pH-Regulator zwischen 0,01 und 0,1% w/w, normalerweise auf Aminbasis, zur Stabilisierung der Dispersion;

wobei die Membran bei einer Temperatur von einschließlich und über 5° C einen Film bildet, der eine Bruchdehnung von 500%, eine Zugfestigkeit von 8 MPa, eine Reißfestigkeit von 27 N/mm und eine Viskosität von 50000 bis 100000 mPa.s bei 22° C aufweist.

14. Das Wasserabdichtungssystem nach dem vorangehenden Anspruch, umfassend eine Dämmplatte, eine erste Grundschicht aus Zementmörtel, ein Bewehrungsgewebe, eine zweite Grundschicht aus Zementmörtel, eine erste wasserdichte Membranschicht, die genannte textile Verstärkungsstruktur und eine zweite wasserdichte Membranschicht.

**Revendications**

1. Une structure de renfort textile pour systèmes d'imperméabilisation,

dans laquelle la structure de renfort textile est une structure de tissu en maille tissée ;
dans laquelle le grammage de la structure de renfort textile varie de 60 à 300g/$m^2$ ;
dans laquelle le matériau textile est choisi parmi la liste consistant en : polyester, polypropylène, ou des combinaisons de ceux-ci,

**caractérisée en ce que** l'ouverture de la maille tissée varie de 0,5 à 2,5mm et **en ce que** l'épaisseur de la structure de renfort textile varie de 0,3 à 1,8mm.

2. La structure de renfort textile pour systèmes d'imperméabilisation selon la revendication précédente dans laquelle les ouvertures dans la maille tissée varient de 1 à 2,5mm ; plus préférablement de 1,0 à 2,0mm ; encore plus préférablement de 1,3 à 1,6mm.

3. La structure de renfort textile pour systèmes d'imperméabilisation selon l'une quelconque des revendications précédentes comprenant un grammage de la structure de renfort textile variant de 90 à 200g/$m^2$ ; plus préférablement de 147 à 170g/$m^2$ ; encore plus préférablement de 147 à 163g/$m^2$.

4. La structure de renfort textile pour systèmes d'imperméabilisation selon l'une quelconque des revendications précédentes dans laquelle le grammage de la structure de renfort textile varie de 90 à 200g/$m^2$ et les ouvertures de la maille tissée varient de 1,0 à 2,0mm.

5. La structure de renfort textile pour systèmes d'imperméabilisation selon l'une quelconque des revendications précédentes dans laquelle l'épaisseur de la structure de renfort textile varie de 0,5 à 1,5mm ; plus préférablement de 0,8 à 1,3mm.

6. La structure de renfort textile pour systèmes d'imperméabilisation selon l'une quelconque des revendications précédentes dans laquelle les fils de filaments de la structure de renfort textile comprennent une masse linéaire variant de 150x2 à 250x4 dtex ; préférablement 167x2 à 167x4 dtex.

7. La structure de renfort textile pour systèmes d'imperméabilisation selon l'une quelconque des revendications précédentes dans laquelle les fils de filaments de la structure de renfort textile comprennent une torsion variant de 100 à 700 tours/mètre, préférablement de 200 à 700 tours/mètre, plus préférablement de 200 à 400 tours/mètre, préférablement utilisée dans le sens de la chaîne.

8. La structure de renfort textile pour systèmes d'imperméabilisation selon l'une quelconque des revendications précédentes comprenant une chaîne comprenant 14 à 30 fils/cm, et une trame comprenant 14 à 30 fils/cm ; préférablement, une chaîne comprenant 18 à 23 fils/cm et une trame comprenant 18 à 23 fils/cm.

9. La structure de renfort textile pour systèmes d'imperméabilisation selon l'une quelconque des revendications précédentes dans laquelle le système d'imperméabilisation est un système d'imperméabilisation à base d'eau.

10. La structure de renfort textile pour systèmes d'imperméabilisation selon l'une quelconque des revendications précédentes comprenant un capteur d'humidité ; un capteur de température ; ou des combinaisons de ceux-ci.

11. La structure de renfort textile pour systèmes d'imperméabilisation selon l'une quelconque des revendications précédentes comprenant un contrôle électronique et/ou un moyen de régulation ; en particulier un moyen de chauffage contrôlé, préférablement dans laquelle le moyen de chauffage contrôlé comprend des fils conducteurs.

12. La structure de renfort textile pour systèmes d'imperméabilisation selon la revendication précédente 10, dans laquelle les capteurs sont des capteurs textiles, des capteurs sérigraphiés ou des mélanges de ceux-ci.

**13.** Un système d'imperméabilisation comprenant la structure de renfort textile selon l'une quelconque des revendications précédentes 1-12 et deux ou plus de couches d'une membrane d'étanchéité à base d'eau ; préférablement deux couches ; la membrane d'étanchéité à base d'eau comprenant plus préférablement :

une dispersion à base d'eau de résine polyester-polyuréthane, en une concentration variant de 40 à 70% poids/poids ;
un ou plusieurs additifs exhausteurs de réflexion de rayonnements en une concentration variant de 3 à 10% poids/poids ;
un agent rhéologique en polyuréthane en une concentration variant de 0,01 à 0,10% poids/poids ; un régulateur de pH alcalin entre 0,01 et 0,1% poids/poids,
habituellement à base d'amine, pour stabiliser la dispersion ;

dans lequel la membrane forme une pellicule à une température supérieure ou égale à 5°C, a un allongement à la rupture de 500%, une résistance à la traction de 8Mpa, une résistance à la déchirure de 27N/mm et une viscosité variant de 50000 à 100000mPas à 22°C.

**14.** Le système d'imperméabilisation selon la revendication précédente comprenant un panneau isolant, une première couche de base de mortier de ciment, une maille de renfort, une seconde couche de base de mortier de ciment, une première couche de membrane d'étanchéité, ladite structure de renfort textile et une seconde couche de membrane d'étanchéité.

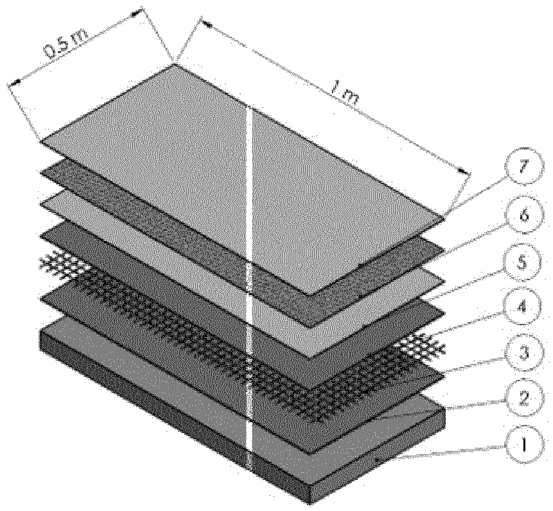


Fig. 1

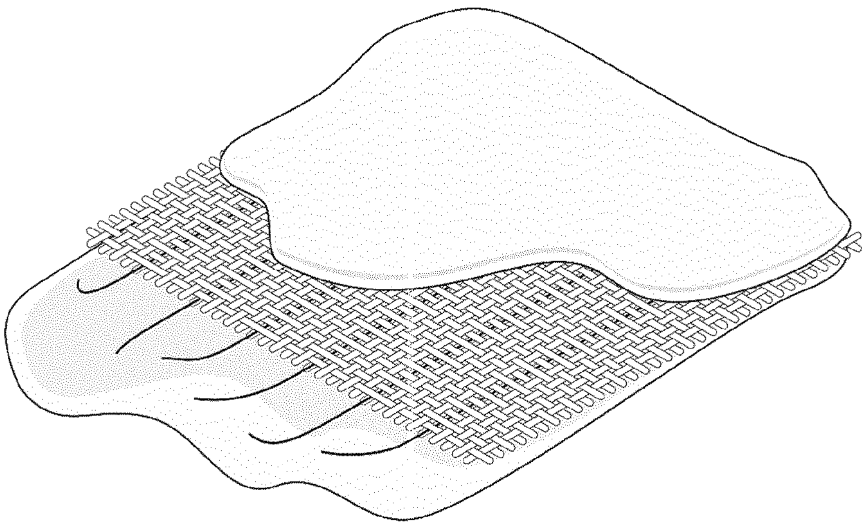

Fig. 2

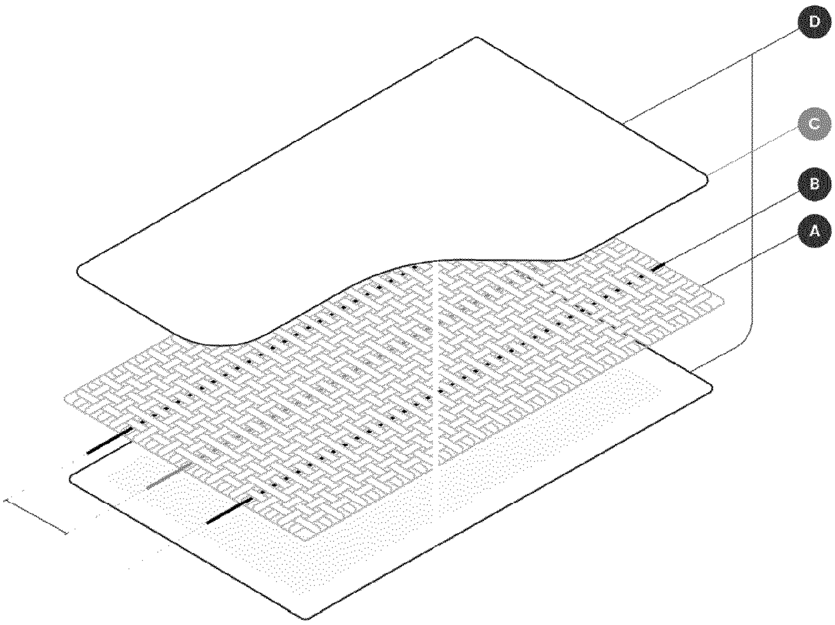


Fig. 3

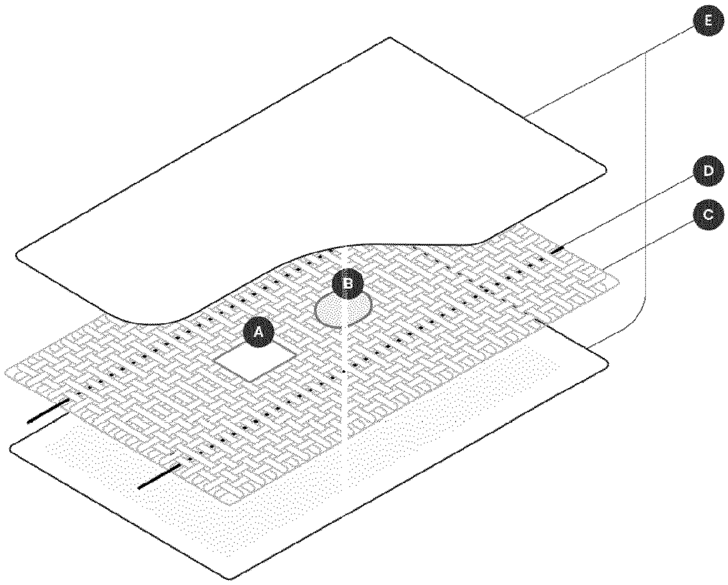


Fig. 4